# EUROPEAN PATENT SPECIFICATION

(11) **EP 2 040 845 B1**
(45) Date of publication and mention of the grant of the patent: **10.05.2017**
(21) Application number: 07748612.4
(22) Date of filing: 21.06.2007
(51) Int. Cl.: B03C 3/30, B03C 3/017, B01D 46/00, B01D 5/00

(54) **AIR FILTER ARRANGEMENT AND METHOD FOR MANUFACTURING THE SAME**
LUFTFILTERANORDNUNG UND HERSTELLUNGSVERFAHREN DAFÜR
AGENCEMENT DE FILTRE À AIR ET SON PROCÉDÉ DE FABRICATION

(30) Priority: 14.07.2006 SE 0601562
(43) Date of publication of application: 01.04.2009
(73) Proprietor: Zehnder Group Nordic AB, 187 13 Täby (SE)
(72) Inventor: KRANTZ, Staffan, S-117 65 Stockholm (SE)
(74) Representative: Israelsson, Stefan
(86) International application number: PCT/SE2007/050452
(87) International publication number: WO 2008/008028

(56) References cited:
- WO-A1-01/39889
- WO-A1-84/04467
- WO-A1-95/33569
- WO-A1-96/24760
- WO-A1-2006/015808
- DE-A1- 3 624 257
- GB-A- 2 314 284
- US-A- 4 147 522
- US-A- 5 230 723
- US-A- 5 681 374

## Description

### BACKGROUND OF THE INVENTION AND PRIOR ART

The present invention relates to an air filter arrangement and a method for manufacturing of such air filter arrangement. The air filter arrangement comprises an air channel, a first air filter which is mounted in the air channel, which first air filter comprises a filter frame provided with at least one passage for through flow of air and a filter body comprising electrostatically chargeable fibres which are attached to the filter frame such that the filter body obtains an extension from the filter frame to a position located at a distance from and downstream the filter frame with respect to the intended flow direction of the air through the air channel.

When air flows through a first air filter of the above-mentioned kind, mutual motions between the fibres in the filter body are provided such they are rubbed to each other. This rubbing and the friction provided when air flows pass the fibres result in that the fibres maintain an electrostatic charging. This type of air filter separates particles from air both by electrostatic and mechanical action. Characteristic for this type of air filter is that the pressure drop over the air filter is substantially unchanged during the life of the filter. The air flow through the air filter will thus be substantially constant during the life of the filter. However, the number of particles, which are caught and maintained on the fibre surfaces, increases successively with the time, which results in that the fibre surfaces to be used for catching future particles by means of electrostatic action decrease. The separation degree of the air filter is thus reduced with the time. The quantity of clean air obtained by means of the air filter decreases thus with the time. When the separation degree has been reduced to a lowest acceptable level, the air filter is exchanged to a new one.

WO 95/33569 shows an arrangement for separating very fine particles from air. An older model of the initially mentioned first air filter is here used which comprises a carrier with attached electrostatically chargeable strap elements. A second air filter in the form of a filter tube is here arranged radially outwardly of the strap elements of the first air filter. The filter tube is provided with electrostatically chargeable fibres having a fluffy structure. The air passing through the filter tube thus provides a low flow resistance. The first air filter is adapted to provide a pre-separation of particles. Furthermore, larger particles fall down and are collected at a bottom plate. Such a pre-separation of particles decreases the loading on the filter tube. The first air filter also has the task to provide an electrostatic field by means of the electrostatically chargeable strap elements. Thus, the fibres in the radially surrounding filter tube provide an electrostatic charging as soon as air flows through the first air filter. The fibres of the filter tube are thus adapted to separate fine particles from the air flowing through the filter tube by means of electrostatic action. A fan for forcing the air through the two air filters is here located upstream the air filters. The fan has here obtained this position since it is difficult to arrange it downstream the two air filters because the air is distributed radially outwardly when it passes the filter tube. Since the fan has this position, it will be flown through by unfiltered air. Sensible parts of the fan thereby risk to be stopped up by particles in the air. The fan here obtains a greatly reduced life.

Usually, barrier filters of different kinds are used for filtering air from particles. Generally, a barrier filter comprises filter cloth provided with fine passages which are intended to allow air to pass through whereas particles in the air are intended to get caught on the filter cloth. The filter cloth may be formed by a textile material but also other types of material can be used. However, the passages are successively stopped up by particles which are caught on the filter cloth. The separation degree of the barrier filter increases concurrently with the stopping-up of the passages. Simultaneously, the pressure drop over the barrier filter also increases, which results in that the air flow through the filter is reduced. However, the effect of the reduced air flow through the barrier filter is more pronounced than the increased separation ability of the filter. Thus, the quantity of clean air provided by the barrier filter decreases with the time. When the barrier filter has reached a certain degree of obstruction, it is exchanged to a new one.

WO 2006/015808, against which the independent claims are delimited, shows a filter with electrostatically chargeable fibres which is mounted between a pre-filtering element and a post-filtering element. The pre-filtering element and the post-filtering element have dimensions for retaining large-size particles while filtration of particles with a very small size will be performed by the filter with electrostatically chargeable fibres.

US 5,681,374 D3 shows a device for the separation of microscopic particles out of air. The device comprises a main particles separation unit with electrostatically chargeable fibres. I first fixed filter is arranged upstream of the separation unit and a second fixed filter is arranged downstream of the separation unit. The fixed filters have an identical construction. The fixed filters are, in practice, so called electrete filters with a fluffy structure which filter out a considerable part of the somewhat coarser particles in the air.

### SUMMARY OF THE INVENTION

The object of the present invention is to provide an air filter arrangement having a long life at the same time as it can provide a substantially constant quantity clean air during substantially the whole life of the filter arrangement.

This object is achieved by the air filter arrangement according to claim 1. A filter cloth is many times relatively thin in relation to its extension but it may also obviously have a considerable thickness. During an initial period when air streams through a filter arrangement according to the invention, all filtering of particles from the air takes place substantially in the first air filter. The air reaching the second air filter is substantially free from particles. After a period of use of the air filter arrangement, a greater and a greater quantity of particles is collected on the electrostatically charged fibre surfaces of the first air filter. Thus, the ability of the fibres to separate future particles from the air is decreased. The air reaching the downstream arranged second air filter contains a greater and a greater quantity of particles. These particles are filtered from the air in the filter body of the second air filter, The passages of the filter cloth of the second air filter will thus be narrower. Thus, the separation degree for the second air filter increases with the time at the same time as the separation degree for the first air filter decreases with the time. Consequently, a combination of said air filters provides a substantially constant high separation degree of particles from air during a large part of its life.

The total pressure drop over the filter combination consists of the sum of the pressure drop over the first air filter and the pressure drop over the second air filter. Consequently, the first air filter is of a type, which substantially is not stopped up during operation. The pressure drop over the first air filter is therefore substantially constant. On the other hand, the second air filter is successively stopped up. Thus, the pressure drop over the second filter increases with the stop up degree of the filter. Since the second air filter only is stopped up at the end of the life of the filter arrangement, the pressure drop over the second air filter will be at a substantially constant level during a large part of the life of the air filter arrangement. Thus, the total pressure drop over the first air filter and the second air filter will also be at a substantially constant level. The air stream through the filter combination, which is related to the pressure drop, is thus also maintained of a substantially constant level. Consequently, the air filter arrangement can provide a substantially constant quantity of clean air during a large part of its life. Since two air filters are used for cleaning the air from particles, the caught particles will be dispersed on the respective air filters. An air filter arrangement with several air filters thus provides a longer life than an air filter arrangement with only one air filter. Consequently, the air filters in the air filter arrangement do not need to be exchanged as often as in the case when only one air filter is used.

According to an embodiment of the present, the filter arrangement comprises a fan adapted to accomplish said air flow through the air channel which fan is arranged in the air channel in a position downstream the second air filter. Thus, the fan is flown through by air which has been filtered from particles. The fan comes thus in contact with considerably fewer particles than if it is positioned upstream the air filter. A fan, which is subjected to large quantities of particles, usually obtains a considerably reduced life. Advantageously, at least the portion of the air channel, which comprises the first air filter and the second air filter, has a straight extension. Thus, curves in the air channel are avoided and the losses of flow in the air channel can be kept on a negligible level. The distance between the first air filter and the second air filter ought to be relatively small. Thus, the air filter arrangement can be made fairly compact. The filter arrangement may comprise wall elements defining the air channel and that said wall elements comprise en first opening for mounting of the first air filter in the air channel and a second opening for mounting of the second air filter in the air channel. A cover or the like may seal the openings when the air filters have been mounted in the air channel.

According to an embodiment of the present invention, the first air filter is mountable as a separate integrated unit in the air channel. Thus, a simple and quick mounting and dismounting of the first air filter in the air channel is provided. The first air filter and the second air filter may be mountable as an integrated unit in the air channel. In this case, only one opening is required in the wall elements defining the air channel for mounting and dismounting of the air filters. The first air filter and the second air filter may be connected to each other by means of a surrounding casing. Consequently, the two air filters are held together in a simple but functional manner.

According to a further embodiment of the present invention, the second filter comprises a bag filter. A bag filter comprises a filter cloth which is provided with several bag-shaped portions. Thus, the filter cloth provides a large surface which can be used for filtering particles from air flowing through the bag filter. Thus, a bag filter can be used a relatively long time before it is stopped up and needs to be exchanged. Alternatively, the second filter may consist of a folded filter or a plane filter.

The initially mentioned object is also achieved with the method mentioned in the claim 11.

### BRIEF DESCRIPTION OF THE DRAWINGS

In the following, preferred embodiments of the invention are described as an example with reference to the attached drawings, on which:
- Fig. 1: shows a filter arrangement according to a first embodiment of the invention,
- Fig. 2: shows a cross section view of a filter arrangement according to a second embodiment of the invention,
- Fig. 3: shows a cross section view of a filter arrangement according to a third embodiment of the invention,
- Fig. 4: shows a cross section view of a filter arrangement according to a fourth embodiment of the invention,
- Fig. 5: shows schematic graphs how the pressure drop over the air filters varies with the time and
- Fig. 6: shows schematic graphs how the separation degree of the air filters varies with the time.

### DETAILED DESCRIPTION OF PREFERRED EMBODIMENTS OF THE INVENTION

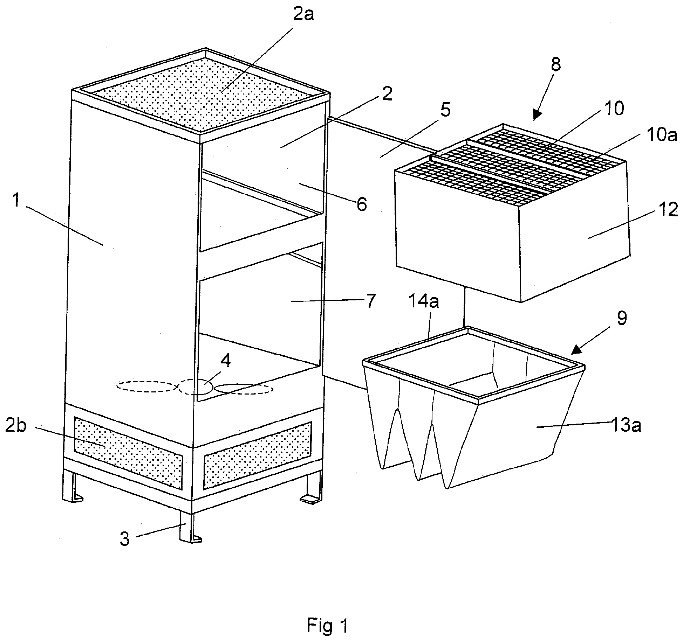

Fig. 1 shows a filter arrangement performed with wall elements 1 defining an inner air channel 2. In this case, the filter arrangement is provided with legs 3 such that it is placeable on a floor surface. Alternatively, it could be arranged in an elevated position and attached against a wall surface, roof surface or the like. The air channel 2 has an axial inlet opening 2a for air which is located at an upper end of the filter arrangement and radial outlet openings 2b which are located at a lower end of the filter arrangement. The filter arrangement comprises a homogeneous bottom plate 1a which makes that the air only can flow out from the filter arrangement through the radial outlet openings 2b. A schematically shown fan 4 is adapted to accomplish a forced air flow through the air channel 2. The filter arrangement comprises an openable cover 5, which in a closed position, seals a first opening 6 and a second opening 7 to the air channel 2. When the cover 5 is in an open position, it is possible to mount and dismount a first air filter 8 in the air channel 2 via the opening 6 and a second air filter 9 in the air channel 2 via the opening 7.

The first air filter 8 comprises at least a frame 10 which is provided with an attached filter body 11 of electrostatically chargeable fibres. However, any filter bodies 11 are not visible in Fig. 1. The filter frame 10 is formed by longitudinal and transversal distance elements which define intermediate passages 10a for air. When air flows through such an air filter 8, the air flows initially through said air passages 10a. Thereafter, the air flows through the filter body 11 in a substantially longitudinal direction to the electrostatically chargeable fibres. Thus, relative motions between adjacent fibres are arisen in the filter body 11, which results in that the fibres are charged electrostatically. Consequently, an electrostatic attraction is accomplished between the particles in the air and the charged fibres which makes that the particles are caught on the surfaces of the fibres. Furthermore, a mechanical separation of particles is accomplished when air flows through the filter body 11. The first air filter 8, which is shown in Fig. 1, comprises a casing 12 which surrounds and keeps together three filter frames 10 with attached filter bodies 11. Therefore, the first air filter 8 can be mounted as an integrated unit in the air channel 2.

The second air filter 9 comprises a filter cloth 9a, which in a mounted state, is adapted to extend across the air channel 2. Thus, the filter cloth 9a will be flown through by air flowing in a longitudinal direction of the air channel 2. The filter cloth 9a can be constructed by fibres with transversal through for air. The filter cloth 9a can be performed by a textile material. The second air filter 9, according to the present invention, is mounted downstream the first air filter 8 with respect to the intended flow direction of the air through the filter arrangement. The second air filter 9 is, in Fig. 1, exemplified as a bag filter 13a. A bag filter 13a has a filter cloth 9a comprising a plurality of bag-shaped portions. Thus, a large filter surface is accomplished for catching particles and a large number of passages which the air can flow through. A bag filter 13a thus has a relatively long life. The bag filter13a is attached in a surrounding frame 14a such that it can be mounted as an integrated unit in the air channel 2.

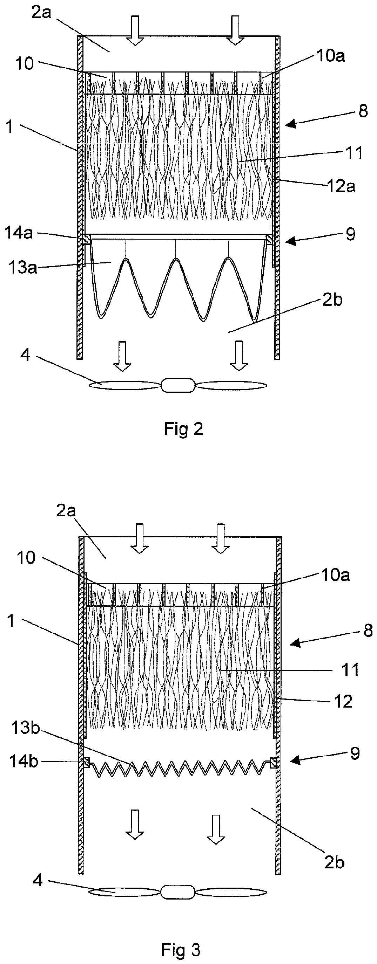

Fig. 2 shows a cross section view of a further filter arrangement according to the invention. This filter arrangement can be mounted in an existing air channel, ventilation channel, cleaning aggregate or the like. The filter arrangement comprises here also wall elements 1 defining an inner air channel 2. The inner air channel 2, in which the air filters 8, 9 are mounted, is provided with an inlet opening 2a and outlet opening 2b. A fan 4 is mounted in the air channel 2 in a suitable position downstream the air filters 8, 9. The fan 4 is adapted to accomplish a forced air flow through the air channel 2. The first air filter 8 consists of a frame 10 with distance elements which are arranged such air passages 10a are formed. The distance elements 10 are relatively thin such that the air only provides small flow losses when it flows through the air passages 10a. A large number of electrostatically chargeable fibres are attached to the filter frame 10 at an upper end. The fibres hang loosely down from the frame 10 to a lower end. Thus, the fibres obtain an extension from the filter frame 10 to a position located at a distance from and downstream the filter frame 10 with respect to the intended flow direction of the air through the air channel 2. The fibres can have an optional length. Advantageously, the filter body 11 consists of a large number of synthetic fibres which may be polymer fibres. However, the fibre body 11 can contain fibres of other synthetic material or natural material or mixtures of these. However, the fibres must have the property that they are electrically chargeable such that they can attract and bind particles which are transported with the air through the filter body.

The second air filter 9 is, in Fig. 2, also exemplified as a bag filter 13a which has a filter cloth extending across the air channel 2 in a mounted state. The bag filter 13a is attached in a surrounding frame 14a. The surrounding frame 14a with the bag filter 13a is here attached inside a casing 12a which also surrounds the first air filter 8. Thus, in this case, the first air filter 8 and the second air filter 9 can be mounted as an integrated unit in the air channel 2.

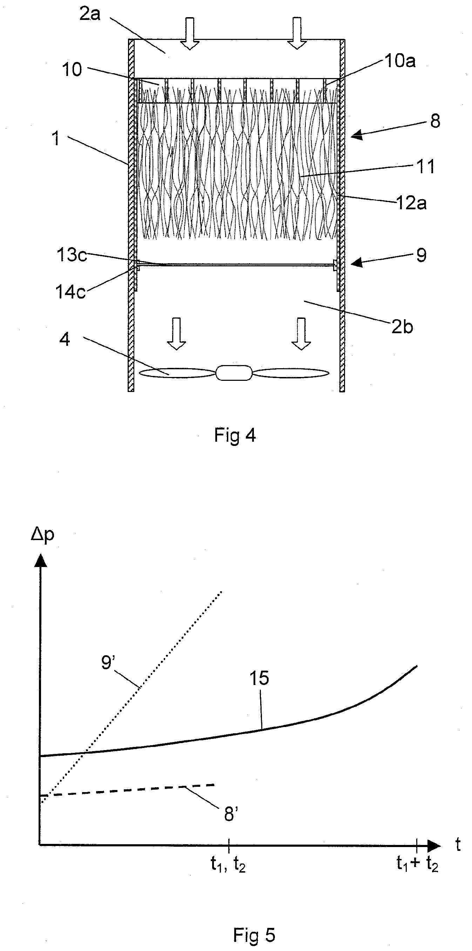

Fig 3 shows a cross section view of a filter arrangement according to a further embodiment. The second filter 9 is here exemplified as a folded filter 13b. The folded filter 13b comprises a folded filter cloth extending over the air channel 2. The folded filter 13b is attached in a surrounding frame 14b. Fig. 4 shows a cross section view of a filter arrangement according to a further embodiment. The second filter 9 is here exemplified as a plane filter 13c. The plane filter 13c comprises en substantially plane filter cloth extending over the air channel 2. The plane filter 13c is attached in a surrounding frame 14c.

Fig. 5 shows a dashed graph 8' which schematically shows how the pressure drop Δp varies with the time t over a separate air filter of the type which is used as first air filter 8 in the filter arrangement. The first air filter 8 is supposed to have the life t₁ when it is used separately. Since the filtering of the particles in such an air filter is accomplished in the longitudinal direction of the fibres, the first air filter 8 is substantially not stopped up. Thus, the pressure drop Δp increases only very slightly during the life t₁ of the filter. The dashed graph 9' shows schematically how the pressure drop Δp varies with the time t over a separate air filter of the type which is used as a second air filter 9 in the filter arrangement. The second air filter 9 is supposed to have the life t₂ in a separate state. Since such a filter successively is stopped up, the pressure drop Δp over the filter increases with the time t. The pressure drop Δp can increase substantially linearly with the time t. With the time means here the time which the air filter is used.

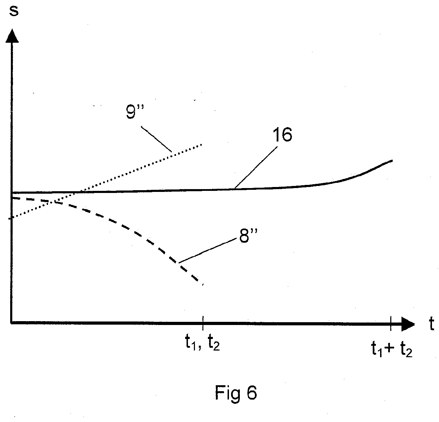

Fig. 6 shows a dashed graph 8" which schematically shows how the separation degree s varies with the time t of a separate air filter of the type which is used as first air filter 8. During operation, more and more particles are caught with the time t on the surfaces of the fibres which reduce the ability of the air filters 8 to separate particles with electrostatic action. Consequently, the separation degree s decreases with the time t of this type of air filter. The dashed graph 9" shows schematically how the separation degree s varies with the time t of the air filter which consists the second air filter 9. Since such an air filter successively is stopped up with the time t by particles, it will be more and more difficult for future particles to pass through the filter. Thus, the separation degree s of the barrier filter increases with the time t.

During operation of the filter arrangement, according to the above, the fan 4 provides an air flow through the respective air channels 2. The fan 4 has a position downstream the air filters 8, 9. Consequently, the air is sucked through the first air filter 8 and then through the second air filter 9. When the first air filter 8 is new, it will provide the main separation of particles from the air flowing through the air channel 2. Thus, the air, which reaches the downstream arranged second air filter 9, is relatively free from particles. The second air filter 9 is therefore maintained during an initial period in a relatively unused state. Thus, the pressure drop Δp over the second air filter will be still on an initial level during the initial period. Consequently, since the pressure drop Δp over the first air filter 8 is substantially constant, the entire pressure drop Δp of the air filters 8, 9 will be substantially constant during said initial period. However, the particle separating ability of the first air filters 8 is gradually decreased. Thus, the second air filter 9 takes more and more over the particle separating work. Thus, the pressure drop Δp over the filter combination will gradually begin to increase. However, the large increase of the pressure drop Δp over the second air filter 9 occurs not until in the end of the life of the filter combination which can correspond to the total life t₁+t₂ of the separate air filters 8, 9. The unbroken graph 15 in Fig. 5 shows how the pressure drop Δp over the filter combination can vary with the time t.

From fig. 6, it is clear that the first air filter 8 and the second air filter 9 has completely different properties with respect to how the separation degree s varies with the time t. However, it is not a desired property that the separation degree s varies with the time t but a constant separation degree s is to prefer. Consequently, the separation degree s of the filter combination is influenced by the separation degrees s of the respective air filters 8, 9. Since the separation degree for the first air filter 8 decreases with the time t and the separation degree s for the second air filter increases with the time s, the filter combination can provide a substantially constant separation degree s during a large part of its life t₁+t₂. The unbroken graph 16 shows how the separation degree can vary with the time t.

If the fan 4 of an air filter arrangement according to the above operates with a constant effect, it provides an air flow through the air filters 8, 9 which is related to the pressure drop Δp over the air filters 8, 9. CADR (The Clean Air Delivery Rate) is a measure of the capacity of an air filter arrangements and is expressed as the quantity clean air which can be delivered. This measure can be calculated as the product of the air flow through an air filter and the separation degree of particles of the air filter. In an air filter arrangement, which only contains the type of air filter used as the first air filter 8, obtains a substantially constant air flow through the air filter during its whole life. On the other hand, the separation degree s is reduced with the time t. Thus, the capacity of such an air filter arrangement to deliver clean air will be reduced with the time. In an air filter arrangement which only contains the type of air filter used as the second air filter 9, obtains a reduced air flow through the air filter with the time when the filter is stopped up. The separation degree s increases here with the time but not so much that this increasing can compensate for the reduced air flow through the air filter 9. Thus, the capacity of such an air filter arrangement to deliver clean air will also be reduced with the time. The air filter arrangement, according to the present invention, which comprises the above mentioned first air filter 8 and second air filter 9 in said order provides a relatively constant pressure drop Δp (see graph 15) and a constant separation degree 2 (see graph 16) during a very large part of its expected life t₁+t₂. Thus, the capacity of the air filter arrangement to deliver fresh air will be maintained on a high constant level during a large part of its life.

The invention is not in any way restricted to the embodiments described on the drawings but may be varied freely within the scope of the claims.

## Claims

1. An air filter arrangement comprising an air channel (2), a first air filter (8) mounted in the air channel (2), which first air filter comprises a filter frame (10) provided with at least one passage (10a) for through flow of air, and a filter body (11) comprising electrostatically chargeable fibres which are attached to the filter frame (10) such that the filter body (11) obtains an extension from the filter frame (10) to a position located at a distance from and downstream the filter frame (10) with respect to the intended flow direction of the air through the air channel (2), a second air filter (9), comprising a filter cloth which, in a mounted state, is adapted to extend across the air channel (2) such that it is flown through by air flowing in an substantial longitudinal direction in the air channel (2), the second air filter being mounted in the air channel (2) in a position located downstream the first air filter (8) with respect to the intended flow direction of the air through the air channel (2), **characterised in that** the second air filter is such that as the particle separating ability of the first filter gradually decreases with time the second air filter takes over more and more of the particle separating work.

2. An air filter arrangement according to claim 1, **characterised in that** the filter arrangement comprises a fan (4) which is adapted to accomplish said air flow through the air channel (2), which fan (4) is arranged in the air channel (2) in a position downstream the second air filter (8).

3. An air filter arrangement according to claim 2, **characterised in that** at least the portion of air channel, which comprises the first air filter (8) and the second air filter (9), has a straight extension.

4. An air filter arrangement according to claim 3, **characterised in that** the filter arrangement comprises wall elements (1) defining the air channel (2) and that wall element (1) comprises a first opening (6) for mounting of the first air filter (8) in the air channel (2) and a second opening (7) for mounting of the second air filter (9) in the air channel (2).

5. An air filter arrangement according to any one of the preceding claims, **characterised in that** the first air filter (8) is mountable as integrated unit in the air channel (2).

6. An air filter arrangement according to claim 5, **characterised in that** the first air filter (8) and the second air filter (9) are mountable as an integrated unit in the air channel (2).

7. An air filter arrangement according to claim 6, **characterised in that** the first air filter (8) and the second air filter (9) are connected to each other by means of a surrounding casing (12a).

8. An air filter arrangement according to any one of the preceding claims , **characterised in that** the second filter is a bag filter (13a).

9. An air filter arrangement according to any one of the preceding claims 1-7, **characterised in that** the second filter is a plane filter (13b).

10. An air filter arrangement according to any one of the preceding claims 1-7, **characterised in that** the second filter is a folded filter (13c).

11. A method for manufacturing an air filter arrangement comprising an air channel (2), wherein the method comprises the step of mounting a first air filter (8) in the air channel (2), which first air filter comprises a filter frame (10) provided with at least one passage (10a) for through flow of air and a filter body (11) comprising electrostatically chargeable fibres which are attached to the filter frame (10), such that the filter body (11) obtains an extension from the filter frame (10) to a position located at a distance from and downstream the filter frame (10) with respect to the flow direction of the air through the air channel (2), the step of mounting a second air filter (9) which comprises a filter cloth in the air channel (2), such that the filter cloth extends across the air channel (2) such that it is flown through by air which flows in a substantial longitudinal direction in the air channel (2) and mounting the second air filter (9) in the air channel (2) in a position downstream the first air filter (8) with respect to the flow direction of the air through the air channel (2), **characterised in that** the second air filter is such that as the particle separating ability of the first filter gradually decreases with time the second air filter takes over more and more of the particle separating work.

## Patentansprüche

1. Luftfilteranordnung, umfassend einen Luftkanal (2), einen ersten Luftfilter (8), der in dem Luftkanal (2) montiert ist, wobei der erste Luftfilter Folgendes umfasst: einen Filterrahmen (10), der mit wenigstens einem Durchlass (10a) zum Durchfluss von Luft versehen ist, und einen Filterkörper (11), der elektrostatisch aufladbare Fasern umfasst, die an dem Filterrahmen (10) anhaften, so dass der Filterkörper (11) eine Ausdehnung vom Filterrahmen (10) zu einer Position erhält, die in einem Abstand vom Filterrahmen (10) und in Bezug auf die beabsichtigte Strömungsrichtung der Luft durch den Luftkanal (2) stromabwärts von diesem angeordnet ist, einen zweiten Luftfilter (9), der ein Filtertuch umfasst, das in einem montierten Zustand dafür geeignet ist, sich quer über den Luftkanal (2) zu erstrecken, so dass es von der Luft durchströmt wird, die im Wesentlichen in Längsrichtung im Luftkanal (2) strömt, wobei der zweite Luftfilter in dem Luftkanal (2) in einer Position montiert ist, die in Bezug auf die beabsichtigte Strömungsrichtung der Luft durch den Luftkanal (2) stromabwärts vom ersten Luftfilter (8) angeordnet ist, **dadurch gekennzeichnet, dass** der zweite Luftfilter derart ausgestaltet ist, dass, wenn die Partikelabscheidungsfähigkeit des ersten Filters mit der Zeit allmählich abnimmt, der zweite Luftfilter mehr und mehr von der Partikelabscheidungsarbeit übernimmt.

2. Luftfilteranordnung nach Anspruch 1, **dadurch gekennzeichnet, dass** die Filteranordnung ein Lüfterrad (4) umfasst, das dafür geeignet ist, den Luftstrom durch den Luftkanal (2) zu bewirken, wobei das Lüfterrad (4) in dem Luftkanal (2) in einer Position stromabwärts vom zweiten Luftfilter (8) angeordnet ist.

3. Luftfilteranordnung nach Anspruch 2, **dadurch gekennzeichnet, dass** wenigstens der Abschnitt des Luftkanals, der den ersten Luftfilter (8) und den zweiten Luftfilter (9) umfasst, eine gerade Erstreckung aufweist.

4. Luftfilteranordnung nach Anspruch 3, **dadurch gekennzeichnet, dass** die Filteranordnung Wandelemente (1) umfasst, die den Luftkanal (2) definieren, und dass das Wandelement (1) eine erste Öffnung (6) zum Montieren des ersten Luftfilters (8) in dem Luftkanal (2) und eine zweite Öffnung (7) zum Montieren des zweiten Luftfilters (9) in dem Luftkanal (2) umfasst.

5. Luftfilteranordnung nach einem der vorhergehenden Ansprüche, **dadurch gekennzeichnet, dass** der erste Luftfilter (8) als integrierte Einheit in dem Luftkanal (2) montierbar ist.

6. Luftfilteranordnung nach Anspruch 5, **dadurch gekennzeichnet, dass** der erste Luftfilter (8) und der zweite Luftfilter (9) als integrierte Einheit in dem Luftkanal (2) montierbar sind.

7. Luftfilteranordnung nach Anspruch 6, **dadurch gekennzeichnet, dass** der erste Luftfilter (8) und der zweite Luftfilter (9) durch ein umgebendes Gehäuse (12a) miteinander verbunden sind.

8. Luftfilteranordnung nach einem der vorhergehenden Ansprüche, **dadurch gekennzeichnet, dass** der zweite Filter ein Beutelfilter (13a) ist.

9. Luftfilteranordnung nach einem der vorhergehenden Ansprüche 1 bis 7, **dadurch gekennzeichnet, dass** der zweite Filter ein ebener Filter (13b) ist.

10. Luftfilteranordnung nach einem der vorhergehenden Ansprüche 1 bis 7, **dadurch gekennzeichnet, dass** der zweite Filter ein Faltenfilter (13c) ist.

11. Verfahren zur Herstellung einer Luftfilteranordnung, umfassend einen Luftkanal (2), wobei das Verfahren den Schritt des Montierens eines ersten Luftfilters (8) in dem Luftkanal (2) umfasst, wobei der erste Luftfilter einen Filterrahmen (10)umfasst, der mit wenigstens einem Durchlass (10a) zum Durchfluss von Luft versehen ist, und einen Filterkörper (11), der elektrostatisch aufladbare Fasern umfasst, die an dem Filterrahmen (10) anhaften, so dass der Filterkörper (11) eine Ausdehnung vom Filterrahmen (10) zu einer Position erhält, die in einem Abstand vom Filterrahmen (10) und in Bezug auf die beabsichtigte Strömungsrichtung der Luft durch den Luftkanal (2) stromabwärts von diesem angeordnet ist, den Schritt des Montierens eines zweiten Luftfilters (9), der ein Filtertuch umfasst, in dem Luftkanal (2), so dass sich das Filtertuch quer über den Luftkanal (2) erstreckt, so dass es von Luft durchströmt wird, die im Wesentlichen in Längsrichtung im Luftkanal (2) strömt, wobei der zweite Luftfilter (9) in dem Luftkanal (2) in einer Position montiert wird, die in Bezug auf die Strömungsrichtung der Luft durch den Luftkanal (2) stromabwärts vom ersten Luftfilter (8) angeordnet ist, **dadurch gekennzeichnet, dass** der zweite Luftfilter derart ausgestaltet ist, dass, wenn die Partikelabscheidungsfähigkeit des ersten Filters mit der Zeit allmählich abnimmt, der zweite Luftfilter mehr und mehr von der Partikelabscheidungsarbeit übernimmt.

## Revendications

1. Agencement de filtre à air comprenant un canal d'air (2), un premier filtre à air (8) monté dans le canal d'air (2), lequel premier filtre à air comprend un cadre de filtre (10) muni d'au moins un passage (10a) pour un écoulement d'air traversant, et un corps de filtre (11) comprenant des fibres pouvant être chargées de manière électrostatique qui sont fixées au cadre de filtre (10) de telle sorte que le corps de filtre (11) obtient une extension à partir du cadre de filtre (10) vers une position située à une distance et en aval du cadre de filtre (10) par rapport à la direction d'écoulement prévue de l'air à travers le canal d'air (2), un second filtre à air (9), comprenant un tissu de filtre qui, à l'état monté, est adapté pour s'étendre à travers le canal d'air (2) de telle sorte qu'il soit traversé par de l'air s'écoulant dans une direction sensiblement longitudinale du canal d'air (2), le second filtre à air étant monté dans le canal d'air (2) dans une position située en aval du premier filtre à air (8) par rapport à la direction d'écoulement prévue de l'air à travers le canal d'air (2), **caractérisé en ce que** le second filtre à air est tel que comme l'aptitude de séparation de particules du premier filtre diminue graduellement au cours du temps, le second filtre à air prend de plus en plus de la tâche de séparation de particules.

2. Agencement de filtre à air selon la revendication 1, **caractérisé en ce que** le l'agencement de filtre comprend un ventilateur (4) qui est adapté pour réaliser ledit écoulement d'air à travers le canal d'air (2), lequel ventilateur (4) est disposé dans le canal d'air (2) dans une position en aval du second filtre à air (8).

3. Agencement de filtre à air selon la revendication 2, **caractérisé en ce qu'**au moins la partie du canal d'air qui comprend le premier filtre à air (8) et le second filtre à air (9) a une extension rectiligne.

4. Agencement de filtre à air selon la revendication 3, **caractérisé en ce que** l'agencement de filtre comprend des éléments de paroi (1) définissant le canal d'air (2), et **en ce qu'**un élément de paroi (1) comprend une première ouverture (6) pour le montage du premier filtre à air (8) dans le canal d'air (2) et une seconde ouverture (7) pour le montage du second filtre à air (9) dans le canal d'air (2).

5. Agencement de filtre à air selon l'une quelconque des revendications précédentes, **caractérisé en ce que** le premier filtre à air (8) peut être monté sous la forme d'une unité intégrée dans le canal d'air (2).

6. Agencement de filtre à air selon la revendication 5, **caractérisé en ce que** le premier filtre à air (8) et le second filtre à air (9) peuvent être montés sous la forme d'une unité intégrée dans le canal d'air (2).

7. Agencement de filtre à air selon la revendication 6, **caractérisé en ce que** le premier filtre à air (8) et le second filtre à air (9) sont reliés l'un à l'autre au moyen d'un boîtier entourant (12a).

8. Agencement de filtre à air selon l'une quelconque des revendications précédentes, **caractérisé en ce que** le deuxième filtre est un filtre à sac (13a).

9. Agencement de filtre à air selon l'une quelconque des revendications 1 à 7, **caractérisé en ce que** le second filtre est un filtre plan (13b).

10. Agencement de filtre à air selon l'une quelconque des revendications précédentes 1 à 7, **caractérisé en ce que** le second filtre est un filtre plissé (13c).

11. Procédé de fabrication d'un agencement de filtre à air comprenant un canal d'air (2), dans lequel le procédé comprend l'étape consistant à monter un premier filtre à air (8) dans le canal d'air (2), lequel premier filtre à air comprend un cadre de filtre (10) muni d'au moins un passage (10a) pour un écoulement d'air traversant, et un corps de filtre (11) comprenant des fibres pouvant être chargées de manière électrostatique qui sont fixées au cadre de filtre (10), de telle sorte que le corps de filtre (11) obtient une extension à partir du cadre de filtre (10) vers une position située à une distance et en aval du cadre de filtre (10) par rapport à la direction d'écoulement de l'air à travers le canal d'air (2), l'étape consistant à monter un second filtre à air (9) qui comprend un tissu de filtre dans le canal d'air (2), de telle sorte que le tissu de filtre s'étend à travers le canal d'air (2) de telle sorte qu'il est traversé par l'air qui s'écoule dans une direction sensiblement longitudinale du canal d'air (2), et de montage du second filtre à air (9) dans le canal d'air (2) dans une position en aval du premier filtre à air (8) par rapport à la direction d'écoulement de l'air à travers le canal d'air (2), **caractérisé en ce que** le second filtre à air est tel que comme l'aptitude de séparation de particules du premier filtre diminue graduellement au cours du temps, le second filtre à air prend de plus en plus de la tâche de séparation de particules.
